# EUROPEAN PATENT APPLICATION

(11) **EP 2 272 459 A1**
(43) Date of publication of application: **12.01.2011**
(21) Application number: 09008947.5
(22) Date of filing: 09.07.2009
(51) Int. Cl.: A61C 5/00

(54) **Assembly of a dental product and a holding system for transport of the dental product**

(71) Applicant: Nobel Biocare Services AG, 8058 Zürich-Flughafen (CH)
(72) Inventor: Karlsson, Per-Olof, 44165 Alingsås (SE); Nilsson, Urban, 44295 Hålta (SE); Melin, Daniel, 41649 Göteborg (SE)
(74) Representative: Byström, Kurt Linus

(57) **Abstract**

The disclosure concerns an assembly of a dental product (4) and a holding system for temporarily holding the dental product (4). The holding system comprises a first and a second part (1, 5) for sandwiching the dental product (4) therein between. The first part (1) is provided with a shape for fittingly matching one side of the dental product (4) and the second part (5) is arranged for releasably bonding another side of the dental product (4) against the second part (5). The disclosure further concerns a method of improving the aesthetics of a tooth. The method comprises placing a dental product (4) onto a tooth by re-placing the dental product (4) from an assembly as described in any one of the preceding claims directly onto the tooth, wherein a part (5) of the assembly is used as a tool for placing the dental product (4) onto the tooth.

## Description

### FIELD OF THE INVENTION

The invention is related to an assembly of a dental product and a holding system for temporarily holding of the dental product. The invention is also related to a method of improving the aesthetics of a tooth.

### BACKGROUND OF THE INVENTION

Dental products such as veneers are often fragile. Between production of the dental product and final placement in a person's oral cavity these dental products need to be transported in such a way that no damage occurs.

Dental products such as prostheses, veneers, and other dental products which need to be placed in the oral cavity of a person, are nowadays often produced at a location which is different from the location where the dentist's chair is situated. Consequently, the dental products need to be transported from the production site to the "placement site". Such dental products may be delicate items and could get damaged if not carefully packaged for transport.

When the dental product concerns a dental implant which more or less replaces an entire tooth, the dental product cannot be considered as highly fragile. This means that the way of packaging is not necessarily predominantly focused on avoiding fracturing of the dental product.

US 5,558,230, US 5,538,428 and US 5,368,160 describe packaging and delivery systems for dental implant systems wherein often use is made of a screw for positioning the dental implant in the container that is used for transport between the production site and the "placement site". As often a healing screw is needed anyway for placement of the dental implant in the oral cavity of the relevant person, such packaging can be very efficient. The screw for fixing the implant in the container can then be the same as the healing screw.

However, where the dental product concerns a very thin and possibly even a very fragile product, such as a thin ceramic tooth veneer, use of any form of tightening or fixing mechanism using, for example a screw, needs to be avoided, or is simply impossible.

It is an object of the invention to provide an assembly of a dental product and a holding system for temporarily holding the dental product, wherein the dental product can be a fragile dental product, such as a thin ceramic tooth veneer.

### SUMMARY OF THE INVENTION

The invention provides an assembly of a dental product and a holding system for temporarily holding the dental product, wherein the holding system comprises a first and a second part for sandwiching the dental product thereinbetween. The first part is provided with a shape for fittingly matching one side of the dental product. The second part is arranged for releasably bonding another side of the dental product against the second part. By providing a fitting match between the first part of the holding system and one side of the dental product, it is possible to hold the dental product "form-fit" against the first part, providing the possibility of offering stability to the positional relationship between the dental product and the first part. By releasably bonding another side of the dental product against the second part it is possible to obtain a fixed positional relationship between the dental product and the second part.

In an embodiment of the invention, the first part and the second part are releasably securable to each other when the assembly is in the assembled condition. The dental product can then indeed be held in a very stable position as sandwiched between the first and second part. This allows for suitable transport of the dental product.

In an embodiment of an assembly in accordance with the invention, the first part comprises a model of at least a tooth part of a person's set of teeth. This part of the model ideally corresponds to a tooth part as present when the dental product is placed in the oral cavity onto that tooth part. As the dental product will have been designed to fittingly match that tooth part of a person's set of teeth, this tooth part will provide the optimal fitting match with one side of the dental product, and as such provide optimal stability when the dental product is accordingly held against that tooth part.

Furthermore, this way of delivering the dental product to the dentist or other skilled practitioner will avoid misunderstanding as to where the dental product needs to be placed.

Additionally, providing the model as part of the first part of the assembly will help at the production side of the dental product, checking the quality of the dental product, in terms of its match with the tooth part for which the dental product has been designed and produced. It is also an efficient way of providing an assembly of a dental product and a holding system for holding the dental product, as such a model will often have to be made anyway for fit check and finalization of finishing layers, such as colouring and/or glazing layers.

In an embodiment of an assembly according to the invention, the second part has grasp holders for manually holding the second part during placement of the dental product against a tooth. This has the advantage that no other tool is required for holding the dental product when the dental product is positioned in the person's oral cavity.

In an embodiment of an assembly in accordance with the invention, the second part comprises a foil. This ensures that the second part will adopt its shape to the dental product, rather than require a deformative response of the dental product on bonding against the second part. The properties of a foil, particularly its sheet-like behaviour, flexibility, thickness, and strength in the plane of a sheet, ensure that it is possible to secure the dental product onto the first part without providing any undesired strain onto the dental product.

In an embodiment of an assembly in accordance with the invention, the second part is transparent. This has the advantage that the dental product as well as much of the first part remains visible even without removing the second part. It furthermore will allow for transport of the dental product from the holding system to the oral cavity of the relevant person, and even for accurate placement of the dental product onto the intended tooth part of that person's set of teeth, by manipulating the second part, possibly even without the need of any other tools. This is because the dental product will always be visible, if the transparent second part is also used as a transfer tool and placement tool. Furthermore, the direct surrounding of the dental product in the person's oral cavity will always be visible during placement of the dental product, further facilitating accurate and swift placement of the dental product.

In an embodiment of an assembly in accordance with the invention, the foil is a tape. A property of tape is that it has on at least one side an adhesive. This will facilitate on the one hand bonding the foil onto the dental product, and on the other hand sticking of the foil onto the first part, facilitating securing together of the first and second part.

In an embodiment of an assembly in accordance with the invention, the foil is made to hold the dental product onto the model by electrostatic holding. This avoids the need for use of any additional compound such as a glue.

It is also possible that the foil is made to hold the dental product onto the model, in addition or as an alternative to electrostatic bonding, by light-hardening bonding and/or by vacuum bonding the foil.

Where in an embodiment of an assembly in accordance with the invention the foil is made to hold the dental product onto the model, such as by light-hardening bonding or vacuum bonding the foil, also the foil is individualized in that it is made to fittingly match the first part which is itself in a fittingly matching positional relationship with the dental product. As such, the dental product is on more than one side fittingly matched by the first and second parts of the holding system, optimizing the design of the cavity so formed for transport of this fragile dental product. The sandwiching is perfected as the dental product is effectively held in a tailor-made envelope. Furthermore, such a foil can be used for placement of the dental product in the oral cavity of the person by placing the foil onto the matching part of the set of teeth. It is preferred that the foil has grasp holders for placing onto and/or for removing the foil from the dental product and/or the first part. This further optimizes the handling of the foil and the dental product.

In an embodiment of an assembly in accordance with the invention, the model is associated with a support for supporting the model. The support and the model are positionally fixed or fixable relative to each other. In that embodiment the assembly further comprises a container. The support has dimensions which for holding the model stable in the container. This ensures that neither the model nor the dental product needs to be put in contact with such a container for ensuring that the model and dental product remain stable. All further fixing of the model and the dental product can be carried out by ensuring that the support is held in a fixed position.

The invention is also directed to a method of improving the aesthetics of a tooth, wherein the method comprises placing a dental product onto a tooth by re-placing the dental product from such an assembly directly onto the tooth, wherein a part of the assembly is used as a tool for placing the dental product onto the tooth.

### BRIEF DESCRIPTION OF THE DRAWING

The invention will further be explained with reference to the drawing in which:
- Fig. 1 -: shows a first part of an embodiment of an assembly in accordance with the invention;
- Fig. 2 -: shows a first part and a dental product of an embodiment of an assembly in accordance with the invention;
- Fig. 3 -: shows a first part, a dental product, and a second part of an embodiment of an assembly in accordance with the invention;
- Fig. 4 -: shows an embodiment of an assembly in accordance with the invention;
- Fig. 5 -: shows an embodiment of an assembly in accordance with the invention;
- Fig. 6 -: shows a use of an embodiment of an assembly in accordance with the invention;
- Fig. 7 -: shows schematically and in cross section an embodiment of an assembly in accordance with the invention; and
- Fig. 8 -: shows schematically a top view of the embodiment shown in Fig. 7 without its container lid, as viewed in the direction of arrow A;

### DESCRIPTION OF EMBODIMENTS

Specific embodiments of the invention will now be described with reference to the accompanying drawing. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawing is not intended to be limiting of the invention. In the drawing, like numbers refer to like elements.

Each of the Figures shows a complete assembly, or a part of such an assembly, of a dental product and a holding system for temporarily holding the dental product. Advantages of an assembly according to the invention are most pronounced in assemblies where the dental product concerns a fragile product. An example of such a fragile dental product is a veneer. Such a veneer may also be referred to as a laminate. In the following, reference will be made only to a veneer, which should not be construed as limiting. A laminate is also embraced by the term veneer.

Within the dentistry world, a veneer is a thin layer of restorative material placed over a tooth surface, to improve the aesthetics of the tooth. Where the improvement only concerns an improvement of the color of a predetermined tooth, the veneer can be very thin. In some embodiments, the veneer may be made of a glass ceramic. Particularly, such a thin veneer will be very fragile and difficult to handle without breaking it. Furthermore, in embodiments of the invention, the veneer or laminate is a non-framework dental product, i.e. the veneer or laminate is placed directly on to a tooth surface without any intermediate framework to strengthen the laminate or veneer. Other dental prostheses, such as a dental crown or bridge may include a veneering layer on top of a framework, such as a coping or bridge framework, wherein the veneering layer is applied in several layers on top of the framework or coping and subsequently sintered. However, such a veneer on top of a framework does not suffer from strength issues and is not particularly fragile to handle.

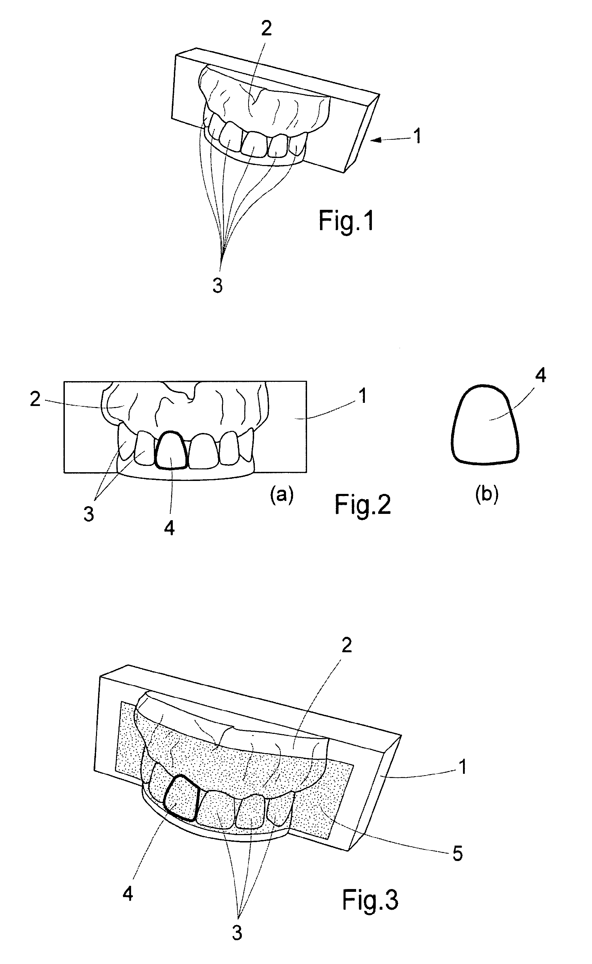

Fig. 1 shows a first part 1 of a holding system according to the invention. The first part 1 is provided with a shape for fittingly matching one side of the dental product (not shown in Fig. 1). As shown, in this example, the first part 1 comprises a model 2 of a set of teeth 3. Often, the model 2 will not comprise a set of teeth 3 that corresponds to the entire set of teeth as present in a person's oral cavity. Rather, the model 2 comprises a set of teeth 3 corresponding only to a subset of the person's teeth 3, such as the upper front part of a person's set of teeth, containing at least one tooth 3 or a tooth part to which the dental product 4 will be applied. It is even possible that the model 2 only comprises that tooth part.

Fig. 2(a) shows a frontal view of the first part 1. Fig. 2(b) shows a frontal part of a veneer 4 that is intended to cover one of the teeth 3 in the set of teeth 3 shown in Fig. 2(a). In this embodiment, the veneer 4 covers a front tooth 3. In Fig. 2 (a) the position of veneer 4 is indicated by the same reference and drawn in thick lines.

It will be clear that a model 2 of the tooth 3 for which the veneer 4 has been designed and produced will most suitably provide a first part 1 with a shape for fittingly matching one side of the veneer 4. However, it is also possible that the first part 1 is provided with a shape for fittingly matching one side of the dental product 4 in a way different from providing a tooth part for which the dental product 4 has been designed and produced. For instance, in situations wherein one side of the dental product 4 has a well-defined geometry, as for instance described by a simple mathematical formula, the first part 1 may be provided with a shape for fittingly matching that shape of the dental product 4 by straightaway producing that side on the basis of the very same simple mathematical formula. In those situations there is no need to rely on the model 2 of a person's set of teeth 3, or a part thereof.

Fig. 3 shows an assembly in accordance with the invention, with, in addition to the first part 1 of the holding system and the dental product 4 also a second part 5 of the holding system. In this embodiment, the second part 5 comprises a foil. Clearly, the dental product 4 is sandwiched between the first part 1 and the second part 5, as it is situated between the tooth which corresponds to the tooth onto which the dental product 4 is to be applied, and the foil. The foil may comprise a tape. As shown in Fig. 3, the first part 1 and the second part 5 are releasably secured to each other. The second part 5, in this example is provided with adhesive on one side (not shown) which allows for releasably securing the second part 5 to the first part 1, and allows for releasably bonding a side of the dental product 4, here veneer 4, against the second part 5.

Preferably, the second part 5 is transparent, so that the dental product 4, in this example the veneer 4, can be seen through the second part 5 and, importantly, also its positional relationship relative to other parts of the model 2 can be seen. This allows for quality control, i.e. whether the veneer 4 fits correctly to the frontal set of teeth 3, for instance, in terms of position and/or color.

Although the second part 5 is so far by way of example described as a foil, possibly provided with an adhesive, the foil may also by other means be made to hold the at least one dental product 4 onto the first part 1. As examples we mention vacuum bonding and/or electrostatic bonding, both methods known per se. For example, vacuum bonding can be provided by a thermo-forming unit, wherein a deformable blank is pre-heated, positioned on top of the first part 1 with the veneer 4 in-between and then deformed by activating a vacuum pump, whereby the blank releasably bonds to the veneer 4, which is supported by the first part 1. Then, the deformed blank can be trimmed to a desired shape. Such vacuum forming apparatus is available e.g., from Dreve, Germany, under the tradenames Vacformat U, Vacformat 2000 and Druformat Scan. Bonding films, such as electrostatic foils or films, films with adhesives, both resin based and light curing based, etc. are available, e.g., from 3M, USA.

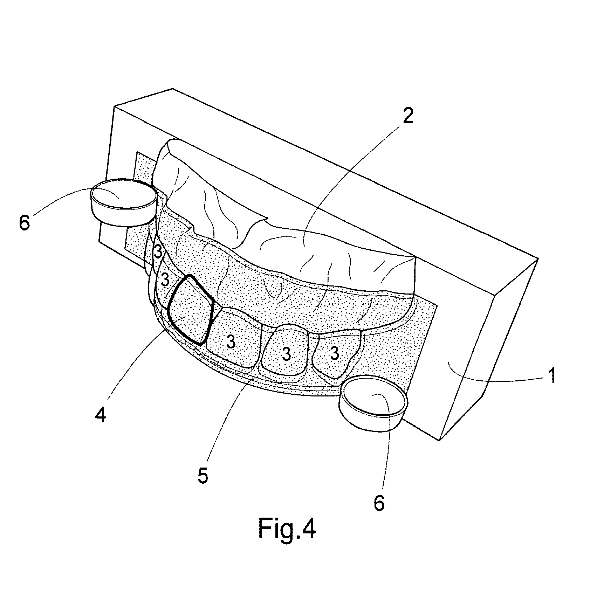

Fig. 4 shows an embodiment of an assembly in accordance with the invention, wherein the second part 5 is provided with grasp holders 6 for manually holding the second part 5 during placement of the dental product 4. Particularly in embodiments wherein the foil is of a material which can be hardened and pre-shaped to fit the model 2, it will not be difficult to apply grasp holder 6 by means of gluing such grasp holders 6 or by purely mechanically attaching such grasp holders 6 to second part 5. The grasp holders 6 are particularly useful in situations wherein a dentist/dental practitioner wishes to use the second part 5 as a tool for placing the tooth veneer 4 onto the predetermined tooth of a person. When providing bonding material onto the tooth that is to be covered by a veneer and/or onto the side of the veneer 4 that will be contacting the tooth, and positioning and holding second part 5 such that the veneer 4 actually covers the tooth to be covered by the veneer 4, the transparency of the second part 5 as well as the facility of the grasp holders 6 prove to be advantageous.

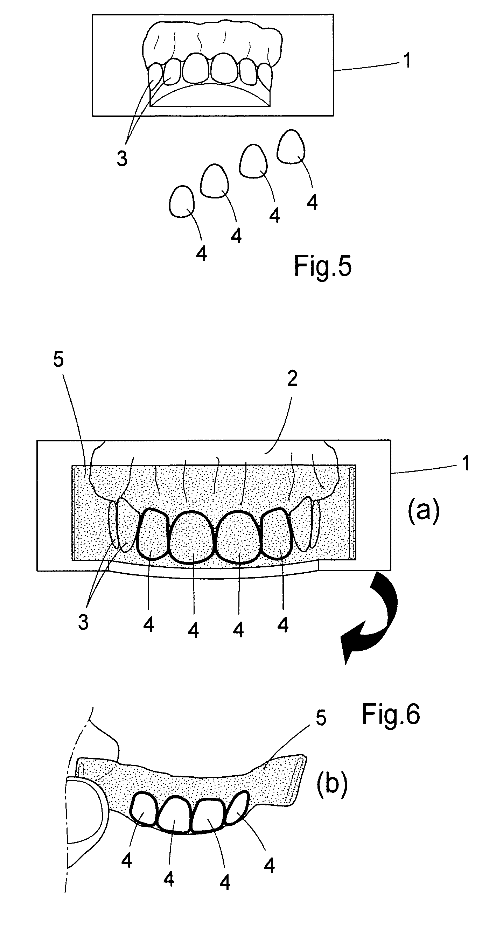

Although the dental product so far has been described as a single-part product, it is very well possible that the dental product comprises multiple parts. As shown in Fig. 5, it is very well possible that the dental product concerns a number of tooth veneers 4. Each tooth veneer 4 may be of a ceramic material, maybe plate-like with a thickness of at least 0.08 mm, less than 0.2 mm, less than 0.14 mm, or less than 0.1 mm. It is possible that also the ceramic material is transparent or translucent. This would further improve the possibility to accurately position the veneer 4 onto the predetermined tooth. The color improvement of the predetermined tooth can then be realized by adding color agents to the bonding material. The ceramic material may then comprise a glass ceramic which is, at least to a certain extent, translucent so that color agents added to the bonding material may contribute to the appearance of the tooth, in terms of its color.

The thickness of the veneer 4 is a mean thickness. At various portions the veneer 4 may be thinner or thicker. For example, the veneer 4 may comprise various structures to look more natural, such as grooves or furrows. Additionally or alternatively, the tooth veneer 4 may comprise a texture at the front surface for a more natural look of the veneer 4 or to recreate a lost feature of a person's dentition, e.g. due to abrasion. It is also thinner at the border of the veneer 4. Hence, providing data for producing the veneer may comprise providing such structure or texture data. Texture or structure data may e.g. be provided automatically or designed using the user interface wherein pre-defined and/or user defined structures or textures are generated.

The ceramic material may be a glass ceramic material ,such as a Li-disilicate glass ceramic. Li-disilicate glass ceramic has a high strength, which provides for improved possibilities to handle the fragile product. Such glass-ceramic is e.g. available under the tradename IPS e.max from Ivoclar Vivadent, Lichtenstein. Alternatively, the ceramic material may comprise a microwave sintered aluminium oxide.

In some embodiments, the veneer 4 comprises a single layer of glass-ceramic having uniform composition. Optionally, non-ceramic coloring and/or glazing layers may be added at least on one side of the veneer 4.

In some embodiments, the tooth veneer is pre-treated with a bonding material before application onto a predetermined tooth of a person and possibly even before delivery to the dental practitioner applying the tooth veneer 4. Using conventional veneers, the bonding material is typically applied to the tooth onto which the veneer is to be applied, the veneer 4 is then placed on that tooth, and the bonding material cured, such as by light curing. According to embodiments of the invention, the bonding material is at least partly applied to the tooth veneer 4, such as 25-75% of the total bonding material to be used for bonding the tooth veneer 4. The pre-treatment can be carried out at the production facility of the tooth veneer 4 or by a dental technician. The pre-treatment of at least one side of the tooth veneer 4, such as the backside facing the tooth, may comprise at least one of the following steps: cleaning of the tooth veneer 4; application of etching gel for preparing a chemical and/or mechanical connection surface; providing etched surface prepared for sealing with silane as transport protection; applying a silanization process for obtaining a silanized surface; application of at least one layer of bonding material on top of the silanized surface; application of coloring material, such as for cervical and/or incisal colorings, before, on top of, or mixed in the bonding material; applying the bonding material to the veneer 4; and light curing the bonding material for delivery to the dental practitioner.

Embodiments may also comprise pre-treatment by the practitioner of the tooth to receive the tooth veneer 4. The pre-treatment by the practitioner may comprise at least one of the following steps: cleaning the non-prepared (i.e. substantially non-ground front surface) surface of the tooth, such as with isopropanol; etching of the tooth surface, such as with etching gel, e.g. fluoride etching gel, fluoride hydrogen etching gel etc.; silanization of the etched tooth surface; and application of the remainder of the binding material, such as 25-75% if 25-75% was applied to the tooth veneer 4 and to end up with a total of 100%, onto the tooth surface. The bonding material applied to the tooth surface may have a neutral color, such as transparent or white, whereby appearance provided by the coloring added to the veneer 4 is substantially not affected.

Embodiments of the invention may also comprise at least one of the following steps for a veneering procedure: providing pre-treated veneer 4 with hardened bonding material; applying the tooth veneer 4 onto the tooth surface comprising bonding material; adjusting the veneer 4; and curing, such as by light curing, the connection between the surfaces with bonding material.

As shown in Fig. 6(a), in an embodiment of an assembly in accordance with the invention, wherein the dental product concerns a plurality of tooth veneers 4 for one set of teeth 3, it will be possible, as shown in Fig. 6(b), that on separating the second part 5 from the first part 1, each of the tooth veneers 4 as bonded to the second part 5 is manually transported to the set of teeth to which the veneer 4 has to be applied. It is then possible to place each of the veneers 4 individually, by applying bonding material only to one predetermined tooth or corresponding tooth veneer 4 at a time, or applying each of the tooth veneers 4 simultaneously onto the predetermined teeth, therewith reducing "chair time" and improving the probability that the veneers 4 are applied without disturbing the relative position to one another.

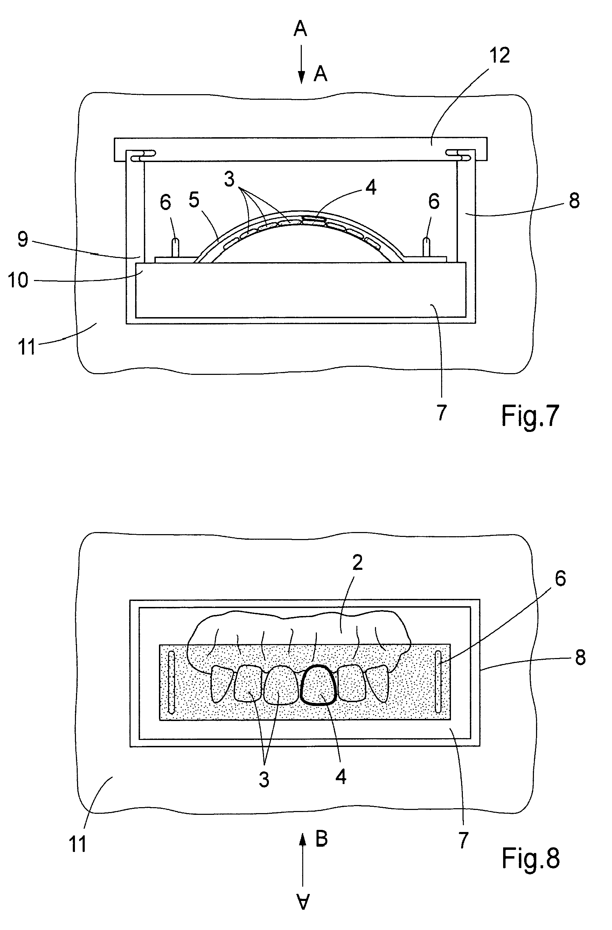

Figures 7 and 8 show schematically two cross sections of an embodiment wherein the model 2 is associated with a support 7 for supporting the model 2. Fig. 8 shows a top view of the embodiment shown in Fig. 7 as viewed in the direction of arrow A in Fig. 7 (without a container lid). Fig. 7 shows a cross section viewed in the direction of arrow B in Fig. 8. Support 7 and model 2 are positionally fixed relative to each other. In the embodiment shown, the first part concerns a single piece part, i.e. the support 7 and the model 2 are integrally connected to each other. However, it is also possible that the support 7 and the model 2 are two separate parts which are fixed or fixable to each other. The assembly schematically shown in Figs. 7 and 8 further comprises a container 8. The support 7 has dimensions for holding the model 2 stable in the container 8. The container 8 may for that purpose for instance internally be provided with a shoulder 9 under which edges 10 of the support 7 can be clamped. The material of the container 8 may be of a thermoplast which allows for slight bending of parts of the container. This would allow for placing the support 7 as shown in Fig. 7 and for closing the container 8 with a container lid 12 by means of a clamping mechanism or snap-fit, or any other mechanism known in the art for providing a closed container 8.

It is further possible, as shown, that the assembly is associated with a packaging 11 for a postal delivery of the assembly in an assembled condition. The packaging 11 is provided with damping material for tightly surrounding the assembly in the assembled condition. Such a clamping mechanism may concern material provided with air cushions (not shown), as known in the art. In this way the dental products, particularly when it concerns a fragile veneer, can be transported from, for instance one end of the world to another end of the world, with very little chance, if at all, that any damage occurs to the dental product.

The first part 1 may be provided by taking an impression of at least a portion of a person's oral cavity containing the tooth surface, scanning the impression or a model cast using the impression, and processing the scan data to obtain a virtual model of the person's dentition. The virtual model may then be used to plan production data both for the veneer 4 and the first part 1. Then, the first part is produced, such as by a CAM procedure, such as rapid prototyping and/or milling. Hence, the first part 1 and the veneer 4 will have surfaces with complementary shapes, possibly with room for the bonding material in-between.

The invention is not limited to the embodiments discussed above. Many modifications and different embodiments are possible. Each of these are understood to fall within the framework of the invention, as defined by the appending claims.

## Claims

1. An assembly of a dental product (4) and a holding system for temporarily holding the dental product (4), wherein the holding system comprises a first and a second part (1, 5) for sandwiching the dental product (4) therein between, wherein the first part (1) is provided with a shape for fittingly matching one side of the dental product (4) and the second part (5) is arranged for releasably bonding another side of the dental product (4) against the second part (5).

2. An assembly according to claim 1, wherein the first part (1) and the second part (5) are releasably securable to each other when the assembly is in the assembled condition.

3. An assembly according to claim 1 or 2, wherein the first part (1) comprises a model 82) of at least a tooth part of a set of teeth (3).

4. An assembly according to any one of claims 1-3, wherein the second part (5) is provided with grasp holders (6) for manually holding the second part (5) during placement of the dental product (4) against a tooth.

5. An assembly according to any one of claims 1-4, wherein the second part (5) is transparent.

6. An assembly according to any one of claims 1-5, wherein the second part (5) comprises a foil.

7. An assembly according to claim 5 or 6, wherein the foil comprises tape.

8. An assembly according to claim 6 or 7, wherein the foil is made to hold the dental product (4) onto the model (2) by light-hardening bonding, electrostatic bonding, and/or vacuum bonding the foil.

9. An assembly according to any one of claims 3-8, wherein the model (2) is associated with a support (7) for supporting the model (2), the support (7) and the model (2) being positionally fixed or fixable relative to each other, and wherein the assembly further comprises a container (8), wherein the support (7) has dimensions for holding the model (2) stable in the container (8).

10. An assembly according to claim 9, wherein the container (8) is associated with a packaging (11) for postal delivery of the assembly in an assembled condition, wherein the packaging (11) is provided with damping material for tightly surrounding the container (8).

11. An assembly according to any one of the preceding claims, wherein the dental product (4) comprises at least one tooth veneer (4).

12. An assembly according to claim 11, wherein each of the at least one tooth veneer (4) is of a ceramic material, is plate-like and has a plate thickness of at least 0.08 mm, wherein the thickness is less than 0.2 mm, less than 0.14 mm or less than 0.1 mm, and wherein the tooth veneer (4) optionally comprises a pre-treated bonding material.

13. An assembly according to claim 12, wherein the ceramic material is translucent.

14. An assembly according to any one of claims 1-14, wherein the dental product (4) comprises a plurality of tooth veneers (4) for one set of teeth (3).

15. A method of improving the aesthetics of a tooth, wherein the method comprises placing a dental product (4)onto a tooth by re-placing the dental product (4) from an assembly as described in any one of the preceding claims directly onto the tooth, wherein a part (5) of the assembly is used as a tool for placing the dental product (4) onto the tooth.
